# EUROPEAN PATENT APPLICATION

(11) **EP 4 607 444 A1**
(43) Date of publication of application: **27.08.2025**
(21) Application number: 23879609.8
(22) Date of filing: 03.10.2023
(51) Int. Cl.: G06Q 50/10, A23L 5/00

(54) **INFORMATION PROVIDING METHOD, INFORMATION PROVIDING SYSTEM, AND PROGRAM**

(30) Priority: 21.10.2022 JP 2022169112
(71) Applicant: Panasonic Intellectual Property Management Co., Ltd., Kadoma-shi, Osaka 571-0057 (JP)
(72) Inventor: TSUJI Kiyotaka, Kadoma-shi, Osaka 571-0057 (JP); OKUMURA Yasuaki, Kadoma-shi, Osaka 571-0057 (JP); KONDO Kenji, Kadoma-shi, Osaka 571-0057 (JP); YAMAJI Satoru, Kadoma-shi, Osaka 571-0057 (JP)
(74) Representative: Grünecker Patent- und Rechtsanwälte PartG mbB
(86) International application number: PCT/JP2023/036099
(87) International publication number: WO 2024/084962

(57) **Abstract**

An information provision method is an information provision method executed by a computer, and includes acquiring first component information i1 related to a component contained in a cooking ingredient C, which is not yet cooked, acquiring second component information i2 related to a component contained in a dish D using the cooking ingredient C, and outputting a cooking condition Zc for cooking the cooking ingredient C, based on at least the first component information i1 and the second component information i2.

## Description

### Technical Field

The present disclosure relates to an information provision method, an information provision system, and a program that provide cooking information.

### Background Art

PTL 1 discloses a data processing method that can reproduce dishes similar to those prepared by a chef. In this data processing method, cooking recipe data is generated on the basis of cooking operation data, which describes information related to cooking ingredients of a dish and information related to the actions of a cook in a cooking process using the cooking ingredients, and sensory data indicating senses of the cook measured in synchronization with the progress of the cooking process.

### Citation List

### Patent Literature

PTL 1: International Publication No. 2020/179407

### Summary of Invention

However, with cooking recipe data generated on the basis of the data indicated in PTL 1, variations may occur in the cooked dish.

The present disclosure provides, for example, an information provision method that suppresses variations occurring in cooked dishes.

An information provision method according to an aspect of the present disclosure is an information provision method executed by a computer and includes acquiring first component information related to a component contained in a cooking ingredient, which is not yet cooked, acquiring second component information related to a component contained in a dish using the cooking ingredient, and outputting a cooking condition for cooking the cooking ingredient, based on at least the first component information and the second component information.

An information provision system according to an aspect of the present disclosure includes a first information acquisition unit that acquires first component information related to a component contained in a cooking ingredient, which is not yet cooked, a second information acquisition unit that acquires second component information related to a component contained in a dish using the cooking ingredient, an information processing unit that derives a cooking condition for cooking the cooking ingredient, based on at least the first component information and the second component information, and an output unit that outputs information related to a pre-cooking condition.

A program according to an aspect of the present disclosure causes a computer to execute acquiring first component information related to a component contained in a cooking ingredient, which is not yet cooked, acquiring second component information related to a component contained in a dish using the cooking ingredient, and outputting a cooking condition for cooking the cooking ingredient, based on at least the first component information and the second component information.

Note that a general aspect of or a specific aspect of the present disclosure may also be realized as a system, a method, an integrated circuit, a computer program, or a recording medium, such as a computer-readable compact-disk read-only memory (CDROM) or may also be realized as any combination of a system, a method, an integrated circuit, a computer program, and a recording medium

According to an information provision method and the like in the present disclosure, variations occurring in cooked dishes can be suppressed.

### Brief Description of Drawings

[Fig. 1] Fig. 1 is a diagram illustrating an example of cooking using an existing cooking method.
[Fig. 2] Fig. 2 is a diagram illustrating an example of cooking using an information provision method according to the present disclosure.
[Fig. 3] Fig. 3 is a block diagram illustrating a functional configuration of an information provision system according to an embodiment.
[Fig. 4] Fig. 4 is a sequence diagram illustrating an operation of the information provision system according to the embodiment.
[Fig. 5] Fig. 5 is a diagram illustrating an example of analysis information regarding a cooking ingredient.
[Fig. 6] Fig. 6 is a diagram illustrating an example of first component information.
[Fig. 7] Fig. 7 is a diagram illustrating an example of cooking ingredient information.
[Fig. 8] Fig. 8 is a diagram illustrating a database included in the information provision system.
[Fig. 9] Fig. 9 is a diagram illustrating an example of a dish list.
[Fig. 10] Fig. 10 is a diagram illustrating an example of a screen for when a desired dish is selected from a dish list.
[Fig. 11] Fig. 11 is a diagram illustrating an example of dish information.
[Fig. 12] Fig. 12 is a diagram illustrating an example of second component information.
[Fig. 13] Fig. 13 is a diagram illustrating an example of a reference cooking condition.
[Fig. 14] Fig. 14 is a diagram illustrating an example of fixed condition items.
[Fig. 15] Fig. 15 is a diagram illustrating an example of a screen for when information related to fixed condition items is accepted.
[Fig. 16] Fig. 16 is a diagram illustrating an example of a cooking condition.
[Fig. 17] Fig. 17 is a diagram schematically illustrating the derivation of a cooking condition using a cooking condition derivation model.
[Fig. 18] Fig. 18 is a diagram illustrating an example of a screen for when a cooking condition is presented.
[Fig. 19] Fig. 19 is a flowchart illustrating an information provision method according to an embodiment.
[Fig. 20] Fig. 20 is a flowchart illustrating a method for generating the cooking condition derivation model.
[Fig. 21] Fig. 21 is a diagram illustrating a procedure for determining the validity of a fixed condition item.
[Fig. 22] Fig. 22 is a block diagram illustrating a functional configuration of an information provision system according to a modification of the embodiment.
[Fig. 23] Fig. 23 is a sequence diagram illustrating the operation of the information provision system according to the modification of the embodiment.
[Fig. 24] Fig. 24 is a diagram illustrating an example of information related to a second component.
[Fig. 25] Fig. 25 is a diagram illustrating an example of important component information.
[Fig. 26] Fig. 26 is a diagram illustrating an example of a screen for when an important component is selected.
[Fig. 27] Fig. 27 is a diagram illustrating a procedure for determining the validity of a cooking condition including an important component.

### Description of Embodiments

### (Underlying Knowledge Leading to the Present Disclosure)

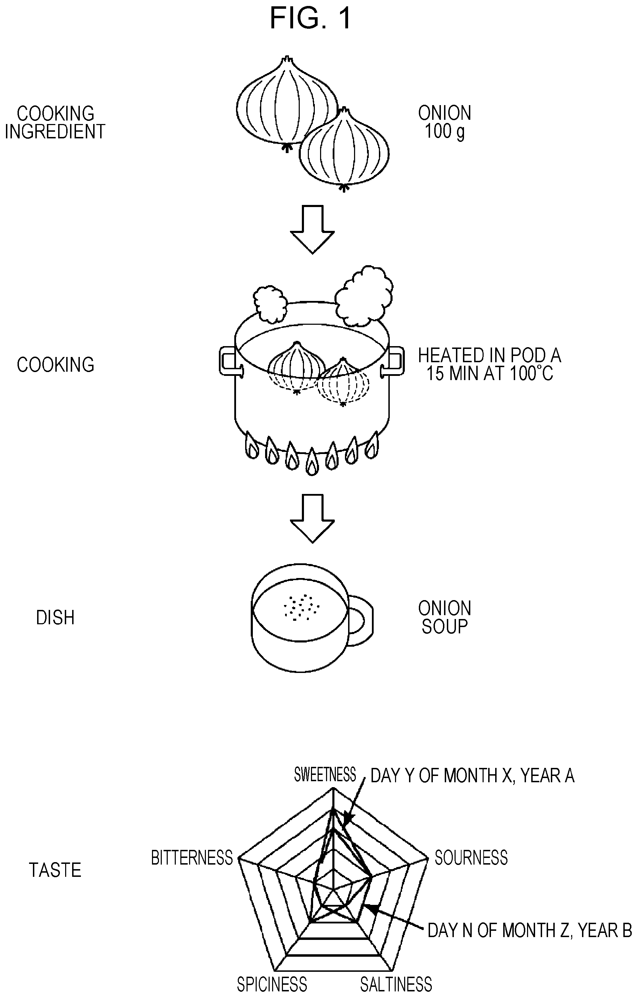

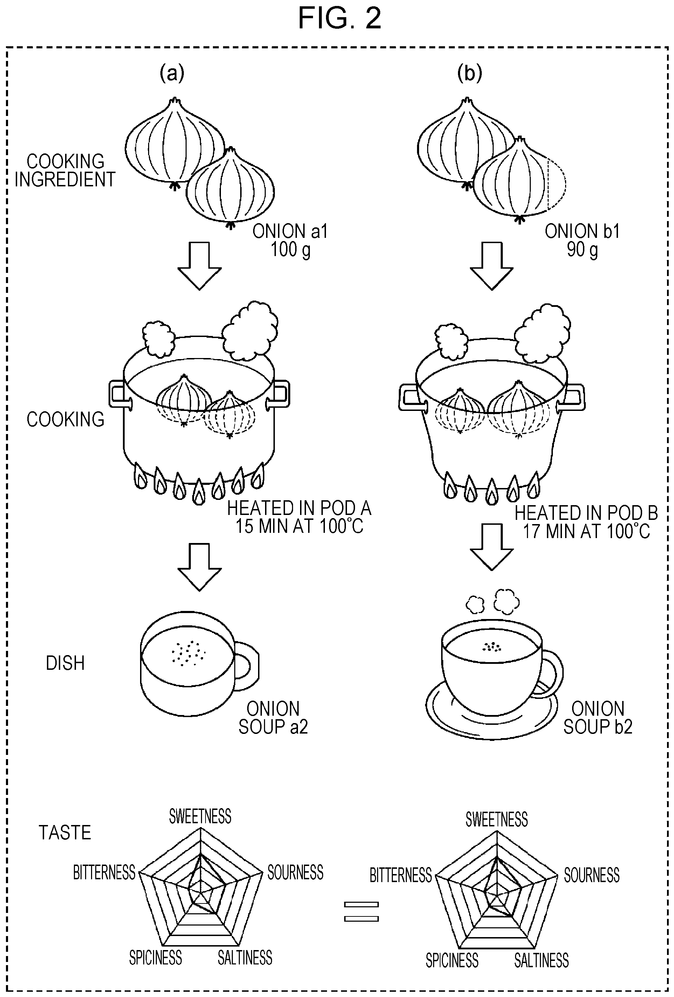

The background leading to the present disclosure will be described with reference to Figs. 1 and 2.

Fig. 1 is a diagram illustrating an example of cooking using an existing cooking method.

Fig. 1 illustrates an example of cooking onions to make onion soup. In this example, the taste of the cooked dish varies depending on the day it was cooked. In this manner, even if the same cooking ingredients are used and cooking is performed using the same cooking method, variations may occur in the cooked dish. Variations in a dish include, for example, variations in the flavor of the dish, the texture of the dish, or the components contained in the dish. The differences in taste after cooking can be attributed to factors, such as differences in the harvest time of onions, differences in freshness even among onions harvested on the same day, differences in the production regions of onions, and variations in producers and production conditions.

Fig. 2 is a diagram illustrating an example of cooking using an information provision method according to the present disclosure.

Part (a) of Fig. 2 illustrates an example of cooking onion soup a2, which is prepared by heating a quantity of 100 g of onion a1 in a pot A for 15 minutes. Part (b) of Fig. 2 illustrates an example of cooking onion soup b2, which is prepared by heating a quantity of 90 g of onion b1 in a pot B for 17 minutes. In this example, a cooking condition for when the onion b1 is cooked is set so that components contained in the onion soup b2 can be reproduced to match components contained in the onion soup a2 serving as a reference. This makes the taste of the onion soup b2 almost the same as that of the onion soup a2 and suppresses variations occurring in the cooked dish.

An information provision method and the like according to the present disclosure have the following configurations to suppress variations occurring in a cooked dish as mentioned above.

An information provision method according to the present disclosure is an information provision method executed by a computer, and includes acquiring first component information related to a component contained in a cooking ingredient, which is not yet cooked, acquiring second component information related to a component contained in a dish using the cooking ingredient, and outputting a cooking condition for cooking the cooking ingredient, based on at least the first component information and the second component information.

In this manner, the output of the cooking condition on the basis of the first component information and the second component information makes it possible to reproduce the component contained in the dish. This can suppress variations occurring in the cooked dish.

The information provision method may further include acquiring a reference cooking condition serving as a reference condition for when the cooking ingredient is cooked, based on dish information related to the dish using the cooking ingredient, and in the outputting a cooking condition, the dish corresponding to the second component information may be set as a goal, and the cooking condition for cooking the cooking ingredient, which is not yet cooked and corresponds to the first component information, may be output based on the reference cooking condition.

In this manner, the output of the cooking condition further on the basis of the reference cooking condition makes it possible to reproduce the component contained in the dish. This can suppress variations occurring in the cooked dish.

The information provision method may further include acquiring cooking ingredient information including information related to a quantity of the cooking ingredient, and in the outputting a cooking condition, the cooking condition, which is obtained by varying the quantity of the cooking ingredient with respect to the reference cooking condition, may be output based on the reference cooking condition and the cooking ingredient information.

In this manner, the output of the cooking condition, which is obtained by varying the quantity of the cooking ingredient with respect to the reference cooking condition makes it possible to reproduce the component contained in the dish. This can suppress variations occurring in the cooked dish.

The information provision method may further include acquiring a dish list including one or more of the dish, based on the cooking ingredient information, and acquiring, as the dish information, information indicating a dish selected from the one or more of the dish included in the dish list.

In this manner, the acquisition of the above-mentioned dish information makes it possible to derive, for example, a cooking condition for a dish that matches the preferences of a user who uses the information provision method. As a result, when serving a dish that matches the preferences of a user, variations occurring in the dish can be suppressed.

Each of the reference cooking condition and the cooking condition may have condition adjustment items in common with each other, accepting information related to a setting for at least one condition adjustment item among the condition adjustment items included in the reference cooking condition may further be included, and in the outputting a cooking condition, the cooking condition, which is derived such that the setting for the at least one condition adjustment item is reflected, may be output.

In this manner, by accepting information related to a setting for a condition adjustment item, for example, a cooking condition can be derived that matches a setting for a condition adjustment item specified by the user. This can suppress variations occurring in the cooked dish under the cooking condition suitable for the condition adjustment item.

Information related to the setting for the condition adjustment item may be information related to a fixed condition item that causes the setting for the condition adjustment item to remain unchanged and be fixed, and in the outputting a cooking condition, the cooking condition, which is derived such that the information related to the fixed condition item is reflected, may be output.

In this manner, by accepting information related to a fixed condition item, for example, a cooking condition can be derived that is suitable for a fixed condition item specified by the user. This can suppress variations occurring in the cooked dish under the cooking condition suitable for the fixed condition item.

In the outputting a cooking condition, in a case where it is determined that cooking including the fixed condition item is feasible, a cooking condition including the fixed condition item may be determined to be the cooking condition.

In this manner, by determining the cooking condition including the fixed condition item to be the cooking condition in a case where it is determined that cooking including the fixed condition item is feasible, a cooking condition can be derived that enables the fixed condition item to be cooked under the cooking condition. This can suppress variations occurring in the cooked dish under the cooking condition suitable for the fixed condition item.

In the outputting a cooking condition, in a case where it is determined that cooking including the fixed condition item is infeasible, information related to the fixed condition item may be acquired again.

In this manner, by acquiring the information related to the fixed condition item again, a cooking condition can be derived that enables the fixed condition item to be cooked under the cooking condition. This can suppress variations occurring in the cooked dish under the cooking condition suitable for the fixed condition item.

The information provision method may further include accepting information for selecting, as an important component, at least one component among components contained in the dish, and in the outputting a cooking condition, the cooking condition, which is derived such that a cooking condition including the important component is reflected, may be output.

In this manner, by accepting the information related to the important component, for example, a cooking condition can be derived in which the cooking condition including the important component specified by the user is reflected. This can suppress variations occurring in the cooked dish under the cooking condition in which the cooking condition including the important component is reflected.

The information provision method may further include generating a cooking condition derivation model for generating the cooking condition. In the generating a cooking condition derivation model, the cooking condition derivation model may be generated by machine learning a relationship between information related to the component contained in the cooking ingredient, which is not yet cooked, a cooking condition for the dish using the cooking ingredient, and information related to the component contained in the dish, and in the outputting a cooking condition, the cooking condition, which is derived using the cooking condition derivation model, may be output.

In this manner, by using the cooking condition derivation model to derive a cooking condition, a highly accurate cooking condition can be derived. This can suppress variations occurring in the cooked dish.

An information provision system according to the present disclosure includes a first information acquisition unit that acquires first component information related to a component contained in a cooking ingredient, which is not yet cooked, a second information acquisition unit that acquires second component information related to a component contained in a dish using the cooking ingredient, an information processing unit that derives a cooking condition for cooking the cooking ingredient, based on at least the first component information and the second component information, and an output unit that outputs information related to a pre-cooking condition.

In this manner, the derivation of a cooking condition on the basis of the first component information and the second component information makes it possible to reproduce the component contained in the dish. This can suppress variations occurring in the cooked dish.

The first component information may be information obtained by an analyzer analyzing the component contained in the cooking ingredient.

According to this, the first component information can be accurately acquired, and an accurate cooking condition can be derived. This can suppress variations occurring in the cooked dish.

A program according to the present disclosure causes a computer to execute acquiring first component information related to a component contained in a cooking ingredient, which is not yet cooked, acquiring second component information related to a component contained in a dish using the cooking ingredient, and outputting a cooking condition for cooking the cooking ingredient, based on at least the first component information and the second component information.

This program makes it possible to suppress variations occurring in the cooked dish.

Note that the information provision system according to the present disclosure may have the following configuration.

For example, in the information provision system, the first information acquisition unit may further acquire cooking ingredient information including information related to a quantity of the cooking ingredient, and the information processing unit may derive the cooking condition, based on the cooking ingredient information, the first component information, the reference cooking condition, and the second component information.

In this manner, the derivation of a cooking condition on the basis of the cooking ingredient information, the first component information, the reference cooking condition, and the second component information makes it possible to reproduce the component contained in the dish. This can suppress variations occurring in the cooked dish.

The information provision system may further include a menu database that stores data related to the dish, the information processing unit may output the cooking ingredient information acquired by the first information acquisition unit to the menu database, the menu database may output a dish list including one or more of the dish based on the cooking ingredient information to the second information acquisition unit, and the second information acquisition unit may acquire the dish list output from the menu database.

In this manner, the acquisition of the dish list from the menu database makes it possible to derive a cooking condition for the dish corresponding to the cooking ingredient information. This can suppress variations occurring in the cooked dish.

The information provision system may further include a cooking condition database that stores data related to a cooking condition, the information processing unit may output the dish information acquired by the first information acquisition unit to the cooking condition database, the cooking condition database may output the reference cooking condition serving as a cooking condition corresponding to the dish information to the second information acquisition unit, and the second information acquisition unit may acquire the reference cooking condition output from the cooking condition database.

In this manner, the acquisition of the reference cooking condition from the cooking condition database makes it possible to derive a cooking condition based on the reference cooking condition. This can suppress variations occurring in the cooked dish.

The information provision system may further include a second component database that stores data related to the second component information, the information processing unit may output the dish information acquired by the first information acquisition unit to the second component database, the second component database may output the second component information corresponding to the dish information to the second information acquisition unit, and the second information acquisition unit may acquire the second component information output from the second component database.

In this manner, the acquisition of the second component information from the second component database makes it possible to derive a cooking condition based on the second component information. This can suppress variations occurring in the cooked dish.

In the following, for example, an information provision method and an information provision system according to aspects of the present disclosure will be specifically described with reference to the drawings.

Note that each of the embodiments described below is a specific example of the present disclosure. For example, numerical values, shapes, materials, constituent elements, arrangement positions and connection forms of the constituent elements, steps, sequences of steps indicated in the following embodiments are examples and are not intended to limit the present disclosure. In addition, among the constituent elements in the following embodiments, constituent elements that are not described in the independent claims that indicate the highest level concept are described as optional constituent elements.

### (Embodiments)

### [Overall Configuration of Information Provision System]

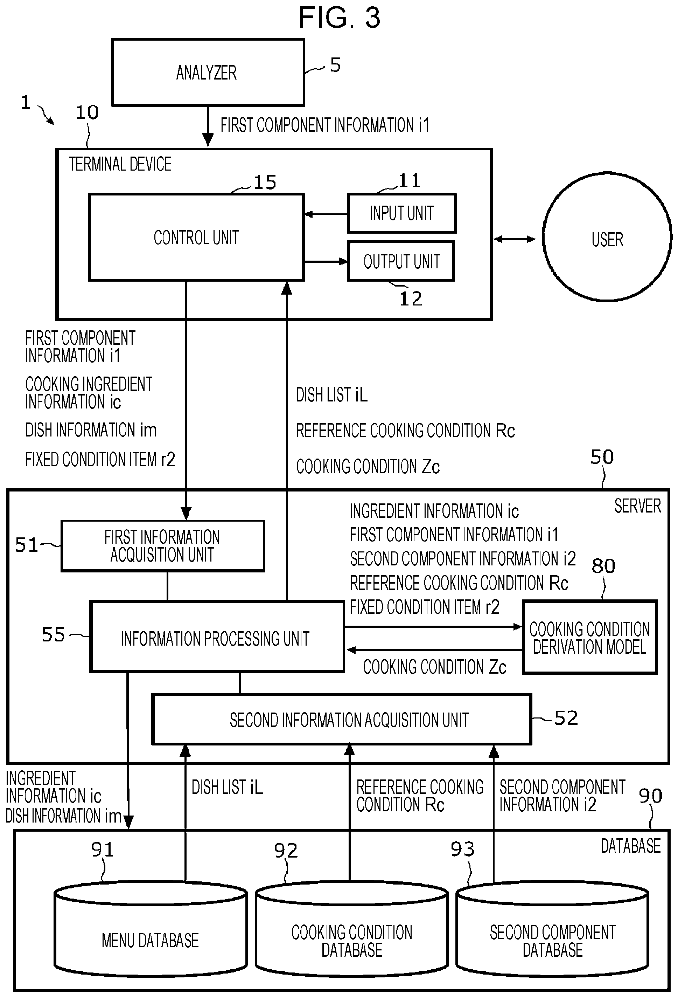

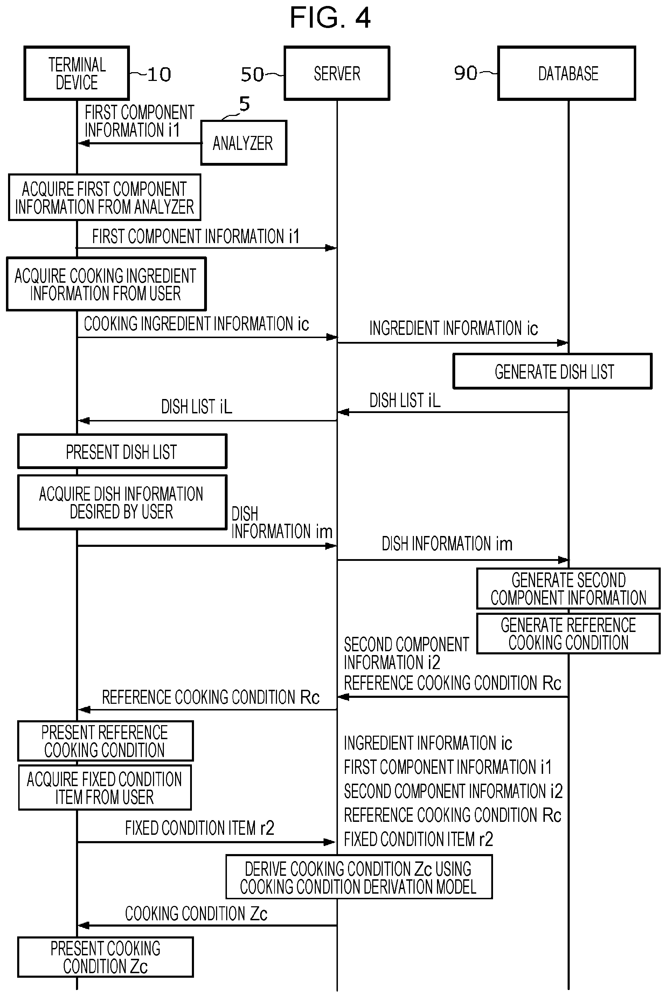

The overall configuration of an information provision system according to an embodiment will be described with reference to Figs. 3 and 4.

Fig. 3 is a block diagram illustrating a functional configuration of an information provision system 1 according to the embodiment.

The information provision system 1 includes a terminal device 10, a server 50, and a database 90. Note that Fig. 3 also illustrates an analyzer 5.

The terminal device 10 and the server 50 establish a communication connection via a communication network. The analyzer 5 and the terminal device 10 establish a communication connection using a wireless communication method, such as Zigbee^{®}, Bluetooth^{®}, or WiFi^{®}, for example. The server 50 and the database 90 establish a communication connection via a communication network. Note that the analyzer 5 and the terminal device 10 do not necessarily establish a communication connection via a communication network. The database 90 may be provided within the server 50 rather than outside the server 50.

The flows of various types of information that are input and output in the information provision system 1 will be described.

Among the various types of information, first component information i1 is information related to components contained in a cooking ingredient C, which is not yet cooked. Second component information i2 is information related to components contained in a cooked dish D. Cooking ingredient information ic includes information related to the quantities of cooking ingredients C and other information. The cooking ingredients C are cooking ingredients that will be cooked. The cooking ingredients C may be food materials themselves or the food materials that have been processed to some extent. A dish D is a dish (a cooking result) obtained by cooking cooking ingredients C.

The cooking ingredients C may be to-be-cooked items, which will be cooked.

The dish may be a cooking menu.

The first component information i1 may include information indicating types of components contained in the cooking ingredient C and the quantities of the components per quantity of the cooking ingredient.

The first component information i1 may include a quantitative or qualitative component ratio of the components contained in the cooking ingredient C.

The first component information i1 may include information indicating the brand, production region, and purchase date of the cooking ingredient that affect the components of the cooking ingredient C.

Information related to the components contained in the cooking ingredient C and included in the first component information i1 may be information related to one or more chemical components identified by an analysis method, such as gas chromatography.

The information related to the components contained in the cooking ingredient C and included in the first component information i1 may be determined by referring to Food Composition Database (https://fooddb.mext.go.jp/) provided by Ministry of Education, Culture, Sports, Science and Technology of Japan.

The second component information i2 may be information indicating types of components contained in the dish D and the quantities of the components per quantity of the dish D.

The second component information i2 may include a quantitative or qualitative component ratio of the components contained in the dish D.

The second component information i2, which is information related to the components contained in the dish D, may be information related to one or more chemical components identified by an analysis method, such as gas chromatography.

A dish list iL is information indicating a list of one or more dishes D that can be cooked using cooking ingredients C. Dish information im is information indicating a dish D selected from the one or more dishes D included in the dish list iL.

A reference cooking condition Rc is a cooking condition serving as a reference condition for when cooking ingredients C are cooked. A condition adjustment item r1 is information related to adjustment of a setting for a cooking condition. A cooking condition Zc is a condition for cooking the cooking ingredients C. For example, a cooking condition Zc according to the present embodiment is a recommended cooking condition that is recommended as a condition for when the cooking ingredients C are cooked.

Fig. 4 is a sequence diagram illustrating an operation of the information provision system 1.

As illustrated in Fig. 4, the analyzer 5 transmits first component information i1 related to components contained in cooking ingredients C, which are not yet cooked, to the terminal device 10. The terminal device 10 transmits the first component information i1 to the server 50.

The terminal device 10 receives, from the user, cooking ingredient information ic including information related to the quantities of the cooking ingredients C and other information and transmits the cooking ingredient information ic to the server 50. The server 50 outputs the cooking ingredient information ic to the database 90. The database 90 outputs a dish list iL including one or more dishes D to the server 50 on the basis of the cooking ingredient information ic. The server 50 transmits the dish list iL to the terminal device 10.

The terminal device 10 displays the dish list iL. The terminal device 10 accepts dish information im indicating a dish D desired by the user among the one or more dishes D included in the dish list iL and transmits the dish information im to the server 50. The server 50 outputs the dish information im to the database 90. The database 90 outputs a reference cooking condition Rc and second component information i2 corresponding to the dish information im to the server 50. The server 50 transmits the reference cooking condition Rc to the terminal device 10.

The terminal device 10 displays the reference cooking condition Rc. The terminal device 10 accepts, from the user, information related to a setting for a condition adjustment item among condition adjustment items r1 included in the reference cooking condition Rc, and transmits the information related to the setting for the condition adjustment item r1 to the server 50. The server 50 inputs the reference cooking condition Rc including the condition adjustment item r1, the cooking ingredient information ic, the first component information i1, and the second component information i2 to a cooking condition derivation model 80.

The cooking condition derivation model 80 derives a cooking condition Zc on the basis of the cooking ingredient information ic, the first component information i1, the reference cooking condition Rc including the condition adjustment item r1, and the second component information i2 and outputs the cooking condition Zc to the server 50. The server 50 transmits the cooking condition Zc to the terminal device 10. The terminal device 10 provides the cooking condition Zc to the user.

In this manner, the information provision system 1 transfers information, such as the cooking ingredient information ic, the first component information i1, the second component information i2, the reference cooking condition Rc, the condition adjustment item r1, the cooking condition Zc, and other information between the terminal device 10, the server 50, and the database 90, and performs information processing on these pieces of information. As a result, the information provision system 1 provides information related to the cooking condition Zc for cooking the cooking ingredients C to the user.

In the following, the analyzer 5 and the individual constituent elements included in the information provision system 1 will be described.

### [Detailed Configuration of Analyzer and Information Provision System]

The detailed configuration of the analyzer 5 and information provision system 1 will be described with reference to Figs. 3 to 18.

The analyzer 5 illustrated in Fig. 3 is a device that analyzes components contained in cooking ingredients C, which are not yet cooked. The above-mentioned first component information i1 is information obtained by the analyzer 5. The analyzer 5 is installed, for example, in the same facility as a facility where the terminal device 10 is located. The analyzer 5 analyzes chemical components contained in the cooking ingredients C, using portions or the entirety of the cooking ingredients C as samples.

Examples of an analysis method performed by the analyzer 5 include liquid chromatography, gas chromatography, hyperspectral imaging, Fourier transform infrared spectroscopy, laser Raman spectroscopy, and thermogravimetric-differential thermal analysis, for example.

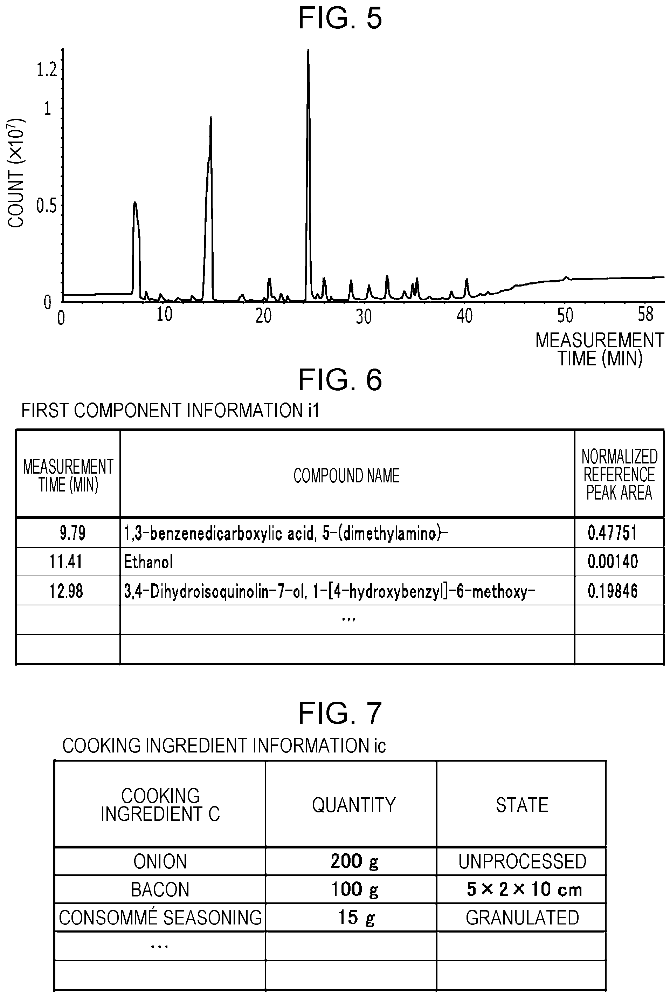

Fig. 5 is a diagram illustrating an example of analysis information regarding a cooking ingredient C.

The analysis information illustrated in Fig. 5 is information obtained by measuring the chemical components contained in the cooking ingredient C using an engineering method. The horizontal axis of this diagram illustrates retention time, and the vertical axis represents the concentration of each compound at each retention time as electrical signal strength. In this example, the analysis information regarding the cooking ingredient C obtained using the above-mentioned analysis method (for example, gas chromatography) is illustrated.

Fig. 6 is a diagram illustrating an example of the first component information i1.

The analyzer 5 derives the first component information i1 illustrated in Fig. 6 on the basis of the analysis information illustrated in Fig. 5. The first component information i1 includes component-specific information regarding chemical components contained in the cooking ingredient C and information reflecting the quantities of the chemical components contained in the cooking ingredient C. The component-specific information regarding the chemical components is information, such as compound name, mass, and retention time. The information reflecting the quantities of the chemical components is information, such as concentration, spectral peak intensity, and spectral peak area. The above-mentioned component-specific information regarding the chemical components and the information reflecting the quantities of the chemical components may be information related to the individual components contained in the cooking ingredient C or information reflecting trends in the components contained in the cooking ingredient C. The analyzer 5 transmits the first component information i1 obtained through the analysis to the terminal device 10.

Note that for cooking ingredients C (for example, seasonings such as salt, sugar, and pepper, bread crumbs, flour, and potato starch), which are used for cooking on a regular basis, can be stored for a certain period of time and whose components hardly change during that period, it is not necessary to analyze the components of the cooking ingredients C every time, and known first component information i1 may be used. Even for a cooking ingredient C in which components may change, if the producer is the same and the production period is the same, known first component information i1 may be used. For example, first component information i1 regarding an onion is acquired through inspection prior to shipment and attached as a bar code or other information at the time of shipment, and the first component information i1 may be acquired by reading the bar code or other information.

As illustrated in Fig. 3, the information provision system 1 includes the terminal device 10, the server 50, and the database 90.

The terminal device 10 is an electronic device that gives and receives information to and from the analyzer 5. The terminal device 10 transmits the first component information i1 acquired from the analyzer 5 to the server 50 via a communication network. This first component information i1 serves as input data when the server 50 derives a cooking condition Zc using the cooking condition derivation model 80.

The terminal device 10 also gives and receives various types of information to and from the server 50, which will be described below, and a user of the information provision system 1. Examples of the user include a cook who performs cooking using cooking ingredients C, a culinary researcher who develops cooking recipes, and a researcher who develops cooking equipment. The cook may be a person who cooks in a restaurant or a person who cooks in a culinary school or at home.

Examples of the terminal device 10 include tablet computers, desktop computers, notebook computers, and smartphones. The terminal device 10 includes an input unit 11, an output unit 12, and a control unit 15.

The control unit 15 has the function of controlling the input unit 11 and the output unit 12. The control unit 15 also has a communication function for communicating with the analyzer 5 and the server 50.

The input unit 11 is a device having a function for the user to input necessary information into the terminal device. Examples used as the input unit 11 include a touch panel, a mouse, a keyboard, and a microphone (voice input). The terminal device 10 uses the input unit 11 to accept various types of information from the user.

The output unit 12 is a device having the function of presenting necessary information to the user and presenting, to the user, the need to make a decision and input the result of the decision. Examples used as the output unit 12 include a liquid crystal display, a cathode-ray tube (CRT) monitor, a printer, and a speaker. The output unit 12 outputs various types of information transmitted from the server 50. That is, the terminal device 10 uses the output unit 12 to provide the various types of information to the user. The input unit 11 and the output unit 12 may be configured by a touch panel.

In the initial stage of using the information provision system 1, the terminal device 10 receives the cooking ingredient information ic, which includes information related to the quantities of the cooking ingredients C and other information.

Fig. 7 is a diagram illustrating an example of the cooking ingredient information ic.

The cooking ingredient information ic illustrated in Fig. 7 includes information indicating, for example, the types of cooking ingredients C, the quantities of the cooking ingredients C, and the states of the cooking ingredients C (unprocessed, cut, paste, etc.). This diagram illustrates that, for example, in a case where the type of a cooking ingredient C is onion, the quantity of the cooking ingredient C is 200 g, and the state of the cooking ingredient C is unprocessed. Unprocessed refers to, for example, a state where the skin is left on and the leaves and roots are cut off. Note that the cooking ingredient information ic may include log information related to the logs of the cooking ingredients C. The log information refers to, for example, information, such as the storage states (room temperature, refrigerated, frozen) of the cooking ingredients C, the dates of harvest or preprocessing, and whether or not the cooking ingredients C have been pre-processed (heat treatment, fermentation, etc.).

This cooking ingredient information ic is input to the terminal device 10 via the input unit 11. Note that in a case where the types, quantities, and states of the cooking ingredients C are disclosed on the Internet, the cooking ingredient information ic may be input to the terminal device 10 via a communication network.

The cooking ingredient information ic input to the terminal device 10 is transmitted to the server 50. This cooking ingredient information ic serves as input data when the server 50 derives a cooking condition Zc using the cooking condition derivation model 80.

The server 50 is a device that gives and receives information to and from the terminal device 10 and the database 90. The server 50 includes the cooking condition derivation model 80 and has the function of deriving cooking conditions Zc. The server 50 may include, for example, a computer, and is installed in a building of a management company that operates the server 50.

As illustrated in Fig. 3, the server 50 includes a first information acquisition unit 51, a second information acquisition unit 52, and an information processing unit 55. The information processing unit 55 has the function of controlling the first information acquisition unit 51 and the second information acquisition unit 52. The information processing unit 55 has a communication function for communicating with the terminal device 10 and the database 90. In the server 50, a program for performing information processing (data processing) in the information processing unit 55 is stored. Individual constituent elements included in the server 50 may be software functions fulfilled by executing programs stored in the server 50.

The first information acquisition unit 51 acquires information transmitted from the terminal device 10, and the second information acquisition unit 52 acquires information output from the database 90. For example, the first information acquisition unit 51 acquires the cooking ingredient information ic, first component information i1, dish information im, and information related to the condition adjustment item r1 that are transmitted from the terminal device 10. The second information acquisition unit 52 acquires the dish list iL, reference cooking condition Rc, and second component information i2 that are output from the database 90. Note that the first information acquisition unit 51 and the second information acquisition unit 52 may be formed by the same single information acquisition unit.

The following describes the relationships between the first information acquisition unit 51, second information acquisition unit 52, and information processing unit 55 that are included in the server 50, the terminal device 10, and the database 90 in order.

The first information acquisition unit 51 acquires the cooking ingredient information ic transmitted from the terminal device 10. The information processing unit 55 outputs the cooking ingredient information ic, which is acquired by the first information acquisition unit 51, to the database 90.

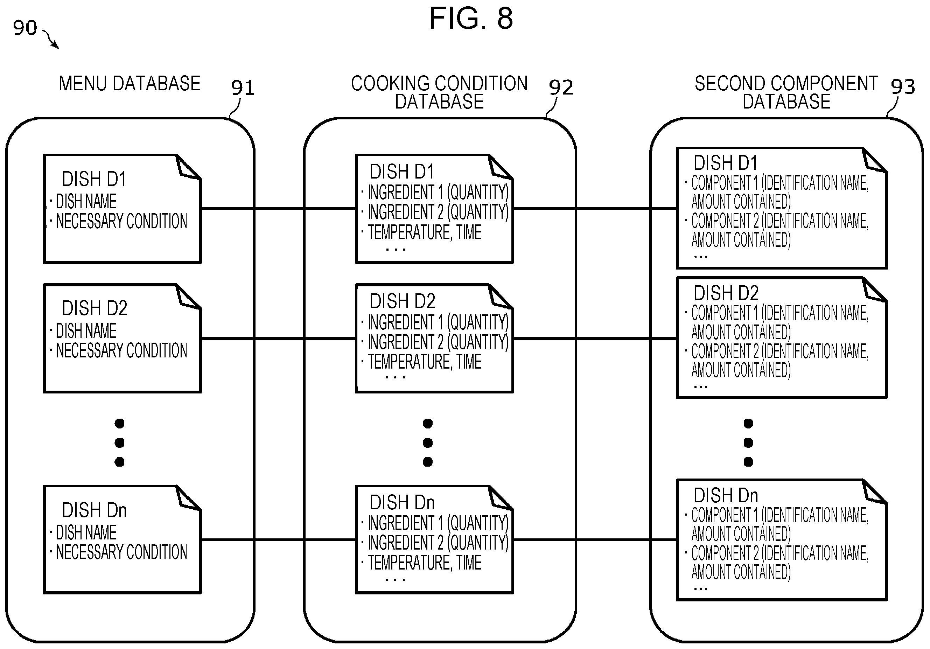

Fig. 8 is a diagram illustrating the database 90 included in the information provision system 1.

The database 90 includes a menu database 91, a cooking condition database 92, and a second component database 93. Pieces of information related to dishes D are linked across these databases 90 and stored.

The database 90 is, for example, a computer, and has the function of extracting, in response to a request from the server 50, matching information from the stored information and transmitting the information to the server 50. The database 90 may be constituted by separate computers or may be constituted by one or more computers using virtualization technology. The database 90 may be constituted by the same computer as the server 50.

In the present embodiment, the cooking ingredient information ic output from the information processing unit 55 is input to the menu database 91 in the database 90.

The menu database 91 stores data related to dishes D. The menu database 91 is a database generated on the basis of, for example, publicly available cooking information and past cooking records, and stores cooking ingredients C and the dishes D in a state where the cooking ingredients C and the dishes D are associated with each other. In this case, a necessary condition corresponds to, for example, the types of the cooking ingredients C (onion, bacon, consommé seasoning, etc.). The menu database 91 extracts dishes D that satisfy a request from the server 50 and generates a dish list iL.

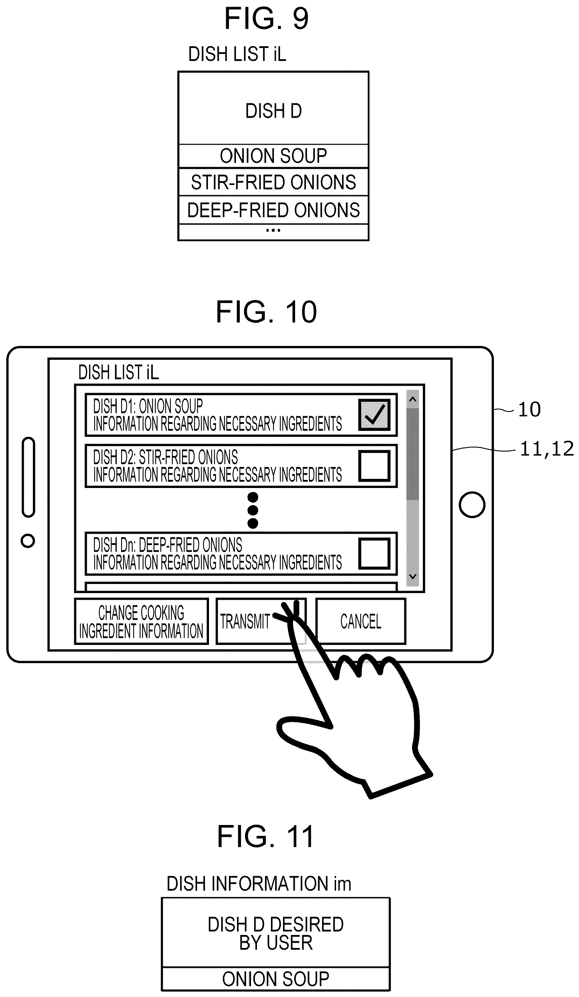

Fig. 9 is a diagram illustrating an example of the dish list iL.

For example, in a case where a request output from the server 50 is "a dish D that can be cooked using both onion and bacon as cooking ingredients C or one of them as a cooking ingredient C", the menu database 91 extracts dishes D, such as "onion soup, stir-fried onions, deep-fried onions" as illustrated in Fig. 9, and generates a dish list iL including the dishes D.

More specifically, in a case where the cooking ingredient information ic output from the server 50 includes
a cooking ingredient C1: type = onion, quantity = 200 g, state = unprocessed
a cooking ingredient C2: type = bacon, quantity = 100 g, state = block (5 × 2 × 10 cm)
a cooking ingredient C3: type = consommé seasoning, quantity = 15 g, state = granulated
(see Fig. 7), the menu database 91 extracts "onion soup, stir-fried onions, deep-fried onions" as dishes D that can be cooked using the cooking ingredients C1 to C3 (see Fig. 9). In this manner, the menu database 91 extracts, on the basis of the cooking ingredient information ic, dishes D that can be cooked using the cooking ingredients C and generates a dish list iL including the dishes D.

Note that the dishes D extracted by the menu database 91 may include a dish D that can be cooked using all of the cooking ingredients C or a dish D that can be cooked using portions of the cooking ingredients C. The dishes D may include a dish D that can be cooked using the entire quantities of the cooking ingredients C or a dish D that can be cooked using partial quantities of the cooking ingredients C.

The menu database 91 outputs the generated dish list iL to the server 50. The second information acquisition unit 52 of the server 50 acquires the dish list iL output from the menu database 91. The information processing unit 55 of the server 50 transmits information related to the dish list iL to the terminal device 10.

Fig. 10 is a diagram illustrating an example of a screen for when a desired dish D is selected from the dish list iL. Fig. 11 is a diagram illustrating an example of the dish information im.

As illustrated in Fig. 10, the terminal device 10 displays the information related to the dish list iL on the output unit 12. This diagram illustrates an example in which "onion soup, stir-fried onions, deep-fried onions" is displayed as the dish list iL and the user has selected onion soup as a desired dish D. The terminal device 10 accepts, via the input unit 11, dish information im indicating the dish D desired by the user, and transmits the dish information im illustrated in Fig. 11 to the server 50.

The server 50 acquires the dish information im using the first information acquisition unit 51, and the information processing unit 55 of the server 50 outputs the dish information im to the database 90.

The dish information im output from the server 50 is input to the second component database 93 in the database 90.

The second component database 93 stores data related to the second component information i2. The second component database 93 is a database generated on the basis of publicly available component information and past analysis records, and stores dishes D and the second component information i2 such that the dishes D and the second component information i2 are associated with each other. The second component database 93 extracts and outputs the second component information i2 that satisfies a request from the server 50.

The second component information i2 is converted into data so as to correspond to the dishes D stored in the menu database 91. The second component information i2 is information that has been measured and analyzed in advance by an analyzer and stored in the second component database 93. The second component information i2 is information obtained in advance by an analyzer different from the above-mentioned analyzer 5. Note that the second component information i2 may be information obtained by the above-mentioned analyzer 5 or publicly available component information.

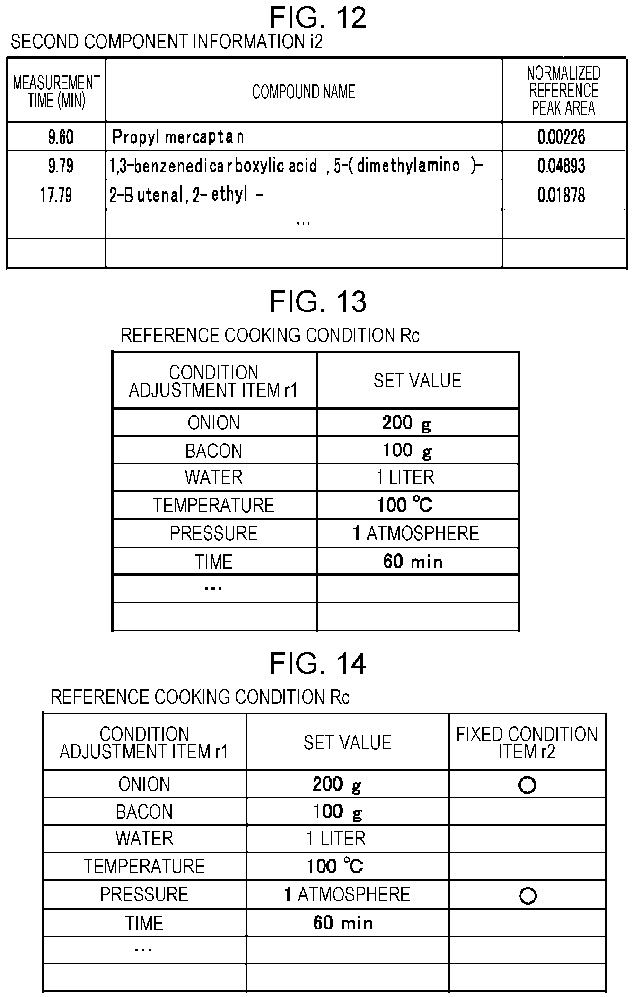

Fig. 12 is a diagram illustrating an example of the second component information i2.

The second component information i2 illustrated in Fig. 12 is constituted by component-specific information regarding chemical components contained in the cooked dish D and information reflecting the quantities of the chemical components. The component-specific information regarding the chemical components is information, such as chemical component identification name, compound name, mass, and retention time. The information reflecting the quantities of the chemical components is information, such as chemical component amount contained, concentration, spectral peak intensity, and spectral peak area. The component-specific information regarding the chemical components and the information reflecting the quantities of the chemical components may be information related to the individual components contained in the dish D or information reflecting trends in the components contained in the dish D. The second component information i2 and the first component information i1 may be partially identical.

The second component database 93 outputs, on the basis of the input dish information im, the second component information i2 corresponding to the dish information im to the server 50. The second information acquisition unit 52 of the server 50 acquires the second component information i2 output from the second component database 93. This second component information i2 serves as input data when the server 50 derives a cooking condition Zc using the cooking condition derivation model 80.

The dish information im output from the server 50 is input to the cooking condition database 92 in the database 90.

The cooking condition database 92 stores data related to reference cooking conditions Rc. The cooking condition database 92 is a database generated on the basis of, for example, publicly available cooking conditions and past cooking records, and stores dishes D and reference cooking conditions Rc in a state where the dishes D and the reference cooking conditions Rc are associated with each other. The cooking condition database 92 extracts and outputs a reference cooking condition Rc that satisfies a request from the server 50.

The reference cooking conditions Rc correspond to the dishes D stored in the menu database 91 and are converted into data. The reference cooking conditions Rc are constituted by information, such as the types, quantities, and cut sizes of cooking ingredients C, cooking procedure, cooking temperature, cooking pressure, and cooking time. The quantities of the cooking ingredients C may be expressed as physical values (weight, volume, etc.) of the cooking ingredients C. Alternatively, only the quantities of the main ingredients may be expressed as physical values, and the other ingredients may be expressed as relative values with respect to a main ingredient among the main ingredients. In this case, the reference cooking conditions Rc also include information, such as which ingredients are the main ingredients and which main ingredient is used to express the relative values of the ingredients, which are expressed using the relative values.

Fig. 13 is a diagram illustrating an example of the reference cooking condition Rc.

Fig. 13 illustrates an example in which the dish is "onion soup", and "item: set value" of the reference cooking condition Rc corresponds to "onion: 200 g", "bacon: 100 g", "water: 1 liter", "cooking temperature: 100°C", "cooking pressure: 1 atmosphere", and "cooking time: 60 min".

The cooking condition database 92 extracts cooking conditions corresponding to the dish information im and generates, on the basis of the extracted cooking conditions, a reference cooking condition Rc corresponding to the cooking ingredient information ic. For example, the cooking condition database 92 generates a reference cooking condition Rc on the basis of cooking conditions extracted in accordance with, for example, the quantities of cooking ingredients C and the states of the cooking ingredients C. The cooking condition database 92 outputs the reference cooking condition Rc to the server 50. The second information acquisition unit 52 of the server 50 acquires the reference cooking condition Rc output from the cooking condition database 92. The information processing unit 55 of the server 50 transmits information related to the reference cooking condition Rc to the terminal device 10.

The terminal device 10 outputs the information related to the reference cooking condition Rc to the output unit 12.

Each of the reference cooking condition Rc and the cooking condition Zc has condition adjustment items r1 in common with each other.

The terminal device 10 outputs an image for acquiring information related to settings for the condition adjustment items r1 to the output unit 12. The condition adjustment items r1 are items for which the cooking condition settings are to be adjusted. The terminal device 10 receives, via the input unit 11, information related to a setting for at least one condition adjustment item r1 among the condition adjustment items r1.

For example, the terminal device 10 receives information related to a fixed condition item r2, which causes a setting for a condition adjustment item r1 to remain unchanged and be fixed, among the condition adjustment items r1.

Fig. 14 is a diagram illustrating an example of fixed condition items r2.

As illustrated in Fig. 14, the reference cooking condition Rc has condition adjustment items r1. The reference cooking condition Rc may have fixed condition items r2. The fixed condition items r2 are condition adjustment items r1 for which the conditions are not allowed to be changed among the condition adjustment items r1. Among the condition adjustment items r1 in the reference cooking condition Rc, the conditions for all condition adjustment items r1 except for the fixed condition items r2 may be adjustable, the conditions for one or more of the condition adjustment items r1 except for the fixed condition items r2 may be adjustable, or the condition for one of the condition adjustment items r1 except for the fixed condition items r2 may be adjustable.

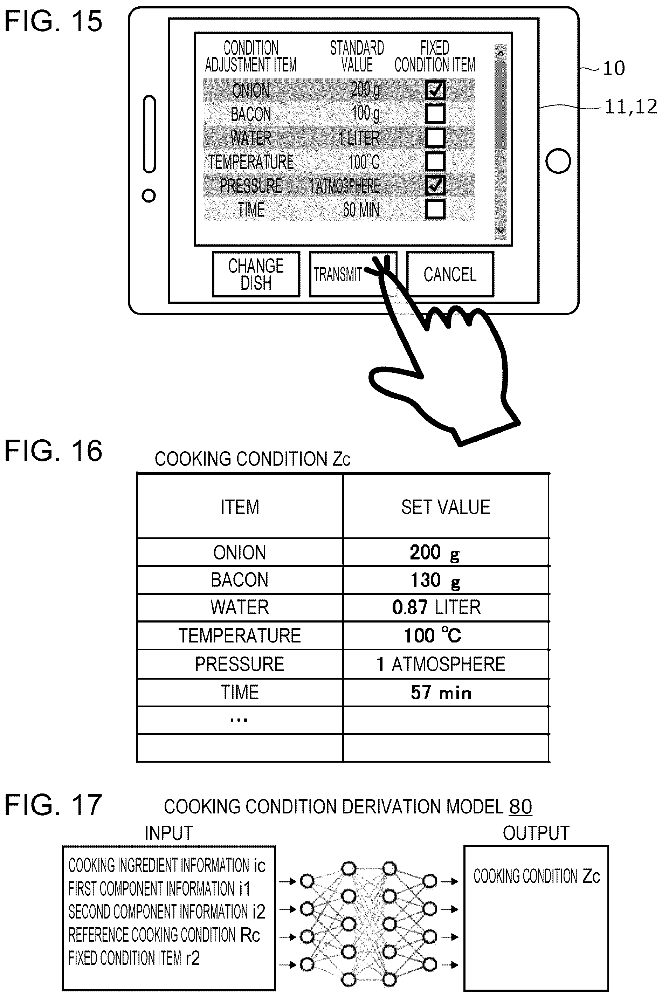

Fig. 15 is a diagram illustrating an example of a screen for when information related to fixed condition items r2 is accepted.

As illustrated in Fig. 15, the terminal device 10 outputs an image for acquiring information related to fixed condition items r2 to the output unit 12. The fixed condition items r2 are determined by the user selecting items for which the conditions are not allowed to be changed among the condition adjustment items r1. One or more cooking conditions included in the cooking condition Zc, which will be derived later, are constrained by the fixed condition items r2.

Fig. 15 illustrates an example in which the quantity of onion and the cooking pressure are selected as fixed condition items r2 in a case where the dish is onion soup, and the quantity of onion, the quantity of bacon, the quantity of water, the cooking temperature, the cooking time, and the cooking pressure are presented as adjustable items. The terminal device 10 accepts the fixed condition items r2 selected and input via the input unit 11, and transmits information related to the fixed condition items r2 to the server 50.

The first information acquisition unit 51 of the server 50 acquires the information related to the fixed condition items r2. The information processing unit 55 causes the information related to the fixed condition items r2 to be reflected in the cooking condition Zc.

Fig. 16 is a diagram illustrating an example of the cooking condition Zc.

The information processing unit 55 derives the cooking condition Zc illustrated in Fig. 16 on the basis of at least the first component information i1 and the second component information i2. More preferably, the information processing unit 55 sets, as a goal, the dish D corresponding to the second component information i2 and derives, on the basis of the reference cooking condition Rc, a cooking condition Zc for cooking the cooking ingredient C, which is not yet cooked and corresponds to the first component information i1. Even more preferably, the information processing unit 55 derives the cooking condition Zc illustrated in Fig. 16 on the basis of the cooking ingredient information ic, the first component information i1, the second component information i2, and the reference cooking condition Rc. In a case where the information related to the fixed condition items r2 is accepted, the information processing unit 55 derives the cooking condition Zc on the basis of the information related to the fixed condition items r2 in addition to the cooking ingredient information ic, the first component information i1, the second component information i2, and the reference cooking condition Rc.

The server 50 stores the cooking condition derivation model 80 for deriving cooking conditions. The information processing unit 55 uses the cooking condition derivation model 80 to derive the cooking condition Zc.

Fig. 17 is a diagram schematically illustrating the derivation of a cooking condition Zc using a trained cooking condition derivation model 80.

The cooking condition derivation model 80 illustrated in Fig. 17 is generated by machine learning the relationship between information related to components contained in cooking ingredients, which are not yet cooked, cooking conditions for a dish using the cooking ingredients, and information related to components contained in the dish. The detailed generation method will be described later. The cooking condition derivation model 80 is generated in advance by another computer different from the server 50.

The trained cooking condition derivation model 80 receives first component information i1, second component information i2, cooking ingredient information ic, a reference cooking condition Rc, and a fixed condition item r2, which serve as input data, to output a cooking condition Zc, which serves as output data. The output cooking condition Zc is output to the information processing unit 55 of the server 50. The detailed method will be described later.

In a case where cooking that includes the fixed condition item r2 is feasible, the information processing unit 55 of the server 50 determines a cooking condition including the fixed condition item r2 to be the cooking condition Zc. In a case where cooking that includes the fixed condition item r2 is infeasible, the information processing unit 55 may make an inquiry to the terminal device 10 again regarding information related to a fixed condition item r2 and acquire a fixed condition item r2 different from the above-mentioned fixed condition item r2 again.

The information processing unit 55 of the server 50 transmits, to the terminal device 10, the cooking condition Zc output from the cooking condition derivation model 80.

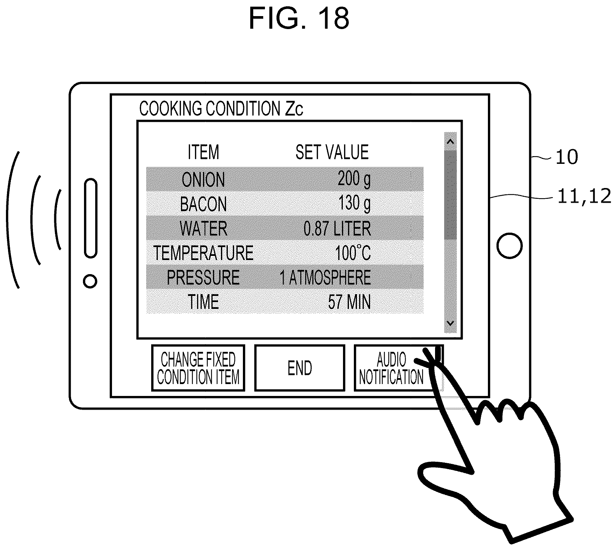

Fig. 18 is a diagram illustrating an example of a screen for when a cooking condition Zc is presented.

As illustrated in Fig. 18, the cooking condition Zc is output to the terminal device 10 via the output unit 12. In the terminal device 10 in this example, the output unit 12 provides an audio notification of information related to the cooking condition Zc.

In this manner, the information provision system 1 according to the present embodiment includes the first information acquisition unit 51, the second information acquisition unit 52, the information processing unit 55, and the output unit 12. The first information acquisition unit 51 acquires first component information i1 related to a component contained in a cooking ingredient C, which is not yet cooked. The second information acquisition unit 52 acquires a reference cooking condition Rc, which serves as a reference condition when the cooking ingredient C is cooked, and second component information i2 related to a component contained in a dish D using the cooking ingredient C, based on dish information im related to the dish D. The information processing unit 55 derives a cooking condition Zc for cooking the cooking ingredient C, based on at least the first component information i1, the reference cooking condition Rc, and the second component information i2. The output unit 12 outputs information related to the cooking condition Zc.

In this manner, the derivation of the cooking condition Zc on the basis of the first component information i1, the reference cooking condition Rc, and the second component information i2 makes it possible to reproduce components contained in the dish D. This can suppress variations occurring in the dish D.

### [Information Provision Method]

An information provision method according to an embodiment will be described.

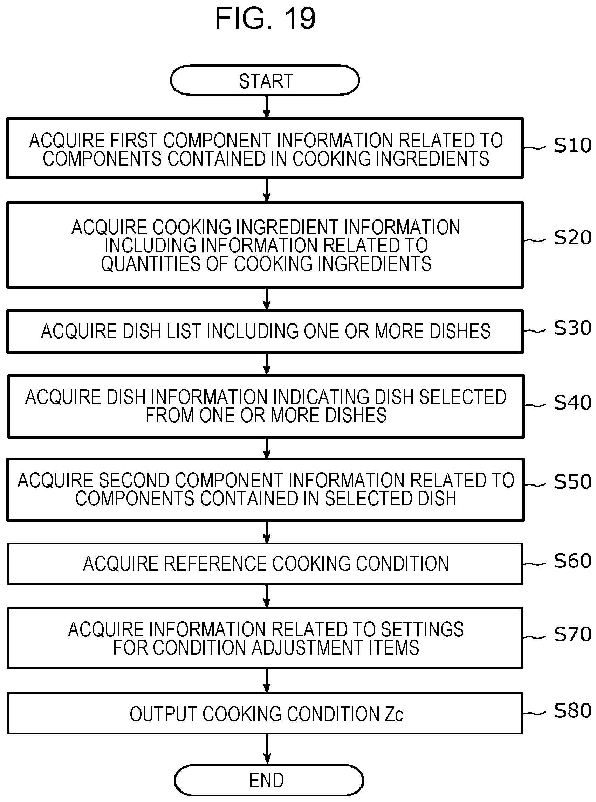

Fig. 19 is a flowchart illustrating an information provision method according to the embodiment.

The information provision method includes Step S10 for acquiring first component information i1. The information provision method also includes Step S20 for acquiring cooking ingredient information ic, Step S30 for acquiring a dish list iL, Step S40 for acquiring dish information im, Step S50 for acquiring second component information i2, Step S60 for acquiring a reference cooking condition Rc, and Step S70 for acquiring information related to a setting for a condition adjustment item r1. The information provision method also includes a cooking condition output step S80 for outputting a cooking condition Zc.

Hereinafter, Steps S10 to S80 will each be described.

The information provision system 1 acquires first component information i1 related to components contained in cooking ingredients C, which are not yet cooked, (Step S10). The first component information i1 is obtained by the analyzer 5 analyzing the cooking ingredients C.

The information provision system 1 also acquires cooking ingredient information ic including information related to the quantities of the cooking ingredients C (Step S20). The cooking ingredient information ic is, for example, information indicating the types of the cooking ingredients C, the quantities of the cooking ingredients C, the states of the cooking ingredients C (unprocessed, cut, paste, etc.), and other information. The cooking ingredient information ic is obtained, for example, by the user inputting information, such as the types, quantities, and states of the cooking ingredients C, into the terminal device 10.

Next, the information provision system 1 acquires a dish list iL including one or more dishes D (Step S30). The dish list iL is a list of dishes D generated in accordance with the cooking ingredient information ic, and is generated by extracting, from the menu database 91, one or more dishes D that can be cooked using the cooking ingredients C.

Next, the information provision system 1 acquires, as dish information im, information indicating a dish D selected from among the one or more dishes D included in the dish list iL (Step S40). The dish information im is obtained, for example, by the user inputting his or her desired dish D into the terminal device 10.

Next, the information provision system 1 acquires second component information i2 related to components contained in the dish D (Step S50). This dish D is a dish included in the above-mentioned dish information im, namely the dish input to the terminal device 10 in Step S40. The second component information i2 is acquired by extracting components corresponding to the dish information im from the second component database 93. Note that the second component information i2 is stored in advance in the second component database 93 by analyzing dishes using an analyzer.

Next, the information provision system 1 acquires a reference cooking condition Rc serving as a reference condition for when the cooking ingredients C are cooked (Step S60). The reference cooking condition Rc is acquired by extracting cooking conditions corresponding to the dish information im from the cooking condition database 92.

Next, the information provision system 1 acquires information related to settings for condition adjustment items r1 of the reference cooking condition Rc (Step S70). The information related to the settings for the condition adjustment items r1 is obtained, for example, via the input unit 11 of the terminal device 10. In the information provision system 1, in the cooking condition output step S80 to be described later, a cooking condition Zc is output such that the setting for at least one condition adjustment item r1 is reflected.

For example, the condition adjustment items r1 include information related to a fixed condition item r2 or fixed condition items r2. The information related to the fixed condition item r2 serves as input data when the cooking condition Zc is output in the cooking condition output step S80.

The information provision system 1 outputs, on the basis of these pieces of information and conditions, the cooking condition Zc for cooking the cooking ingredients C (Step S80). For example, the information provision system 1 may set, as a goal, the dish D corresponding to the second component information i2 and output the cooking condition Zc for cooking the cooking ingredients C, which are not yet cooked and correspond to the first component information i1, on the basis of the reference cooking condition Rc.

The information provision system 1 according to the present embodiment uses the cooking condition derivation model 80 to derive a cooking condition Zc. The cooking condition derivation model 80 receives first component information i1, second component information i2, cooking ingredient information ic, a reference cooking condition Rc, and a fixed condition item r2, which serve as input data, and outputs a cooking condition Zc, which serves as output data. These input data do not all have to be input into the cooking condition derivation model 80 at the same time, as described below.

The following will describe a process for generating the cooking condition derivation model 80 in advance.

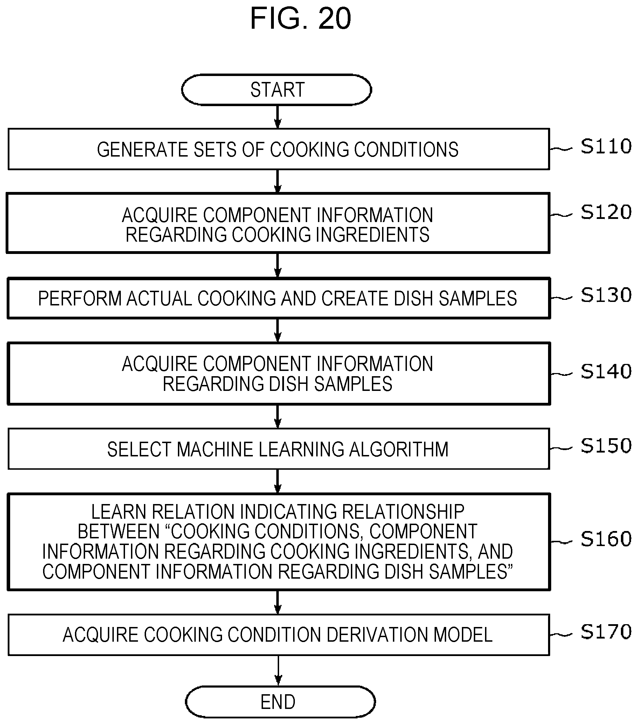

Fig. 20 is a flowchart illustrating a method for generating the cooking condition derivation model 80.

First, using a reference cooking condition Rc as the main condition, sets of cooking conditions (recipes) are generated by varying adjustable items (ingredient quantity, temperature, time, procedure, cut size, etc.) (Step S110). These cooking conditions are stored in the cooking condition database 92. The above-mentioned adjustable items may be changed one at a time or items among the above-mentioned adjustable items may be changed simultaneously. In order to efficiently generate cooking conditions, the sets of cooking conditions may be generated using methods, such as a design of experiments.

Next, component information regarding individual chemical components of cooking ingredients, which are not yet cooked, is acquired (Step S120). The component information regarding the cooking ingredients can be acquired in the same way as the component information regarding cooking ingredients acquired using the analyzer.

Next, actual cooking is performed in accordance with the cooking conditions (recipes) to create dish samples (Step S130). For each dish sample, component information is acquired (Step S140). The component information regarding the dish sample can be acquired in the say way as the component information regarding dishes acquired using the analyzer. In this case, the component information acquired from the dish sample is stored in the second component database 93.

Next, a machine learning algorithm used to generate the cooking condition derivation model 80 is selected (Step S150). Examples that can be used as the machine learning algorithm include a decision tree, a random forest, linear regression, and a neural network.

Next, the selected machine learning algorithm is used to train a model that indicates the relationship between "the cooking conditions (recipes), the component information regarding the cooking ingredients, and the component information regarding the dish samples" (Step S160). The accuracy (general-purpose performance) of the model is evaluated using cross-validation, for example. If the accuracy is insufficient, the machine learning algorithm may be changed and the model may be newly trained.

Note that even in a case where the obtained model has sufficient accuracy, it may be possible that the actual estimation accuracy is not obtained due to pseudo-correlations, for example. Thus, the above-mentioned model may be verified using information from cooking under a new cooking condition that is not included in cooking conditions used in the preliminary training.

The above-mentioned model is a model capable of estimating, in a case where a cooking ingredient that is not yet cooked and has certain component information is cooked under a different cooking condition, how the component information would change in the cooked dish. The cooking condition derivation model 80 is realized using the above-mentioned model. By executing each of the above-mentioned steps, the cooking condition derivation model 80 is acquired (Step S170).

The information provision system 1 uses this cooking condition derivation model 80 to derive a cooking condition Zc.

Specifically, the information provision system 1 acquires cooking ingredient information regarding cooking ingredients C to be used for cooking, and first component information i1 regarding the pre-cooking chemical components of the cooking ingredients C, which are not yet cooked.

The information provision system 1 then refers to the menu database 91 to acquire dish information im related to a dish using the cooking ingredients C. A reference cooking condition Rc, which is a reference condition for when the cooking ingredients C are cooked, is acquired by referring to the cooking condition database 92.

The information provision system 1 generates, as one data set for estimation, one data set including the acquired cooking ingredient information, the first component information i1, and the reference cooking condition Rc.

In addition to this first data set for estimation, the information provision system 1 generates, as second to n-th (n is an integer) data sets for estimation, second to n-th (n is an integer) data sets, each of which includes a corresponding one of sets of cooking conditions obtained by varying at least one condition adjustment item r1 (ingredient quantity, temperature, time, procedure, sizes of cuts, etc.) included in the reference cooking condition Rc for the first data set.

The information provision system 1 inputs the first to n-th (n is an integer) data sets for estimation into the cooking condition derivation model 80, and acquires pieces of component information i2' regarding chemical components of the dish using the cooking ingredients C, the pieces of component information i2' being output from the cooking condition derivation model 80. Here, the information provision system 1 may acquire a fixed condition item r2 or fixed condition items r2 included in the reference cooking condition Rc. In this case, the information provision system 1 may set the at least one condition adjustment item r1 in accordance with the acquired fixed condition item or items r2.

The information provision system 1 acquires, among the pieces of component information i2', the component information i2' that is closest to second component information i2 corresponding to the chemical components, which serve as a goal, of the dish using the cooking ingredients C.

The information provision system 1 outputs, as a cooking condition Zc, a p-th cooking condition included in a p-th data set for estimation including the closest component information i2'.

Using the above-mentioned method, the information provision system 1 uses this cooking condition derivation model 80 to derive a cooking condition Zc. The above-mentioned derivation method is an example, and other derivation methods may also be used.

Note that, in the information provision system 1 according to the present embodiment, whether or not actual cooking with the fixed condition item or items r2 can be performed is determined after the cooking condition Zc is derived.

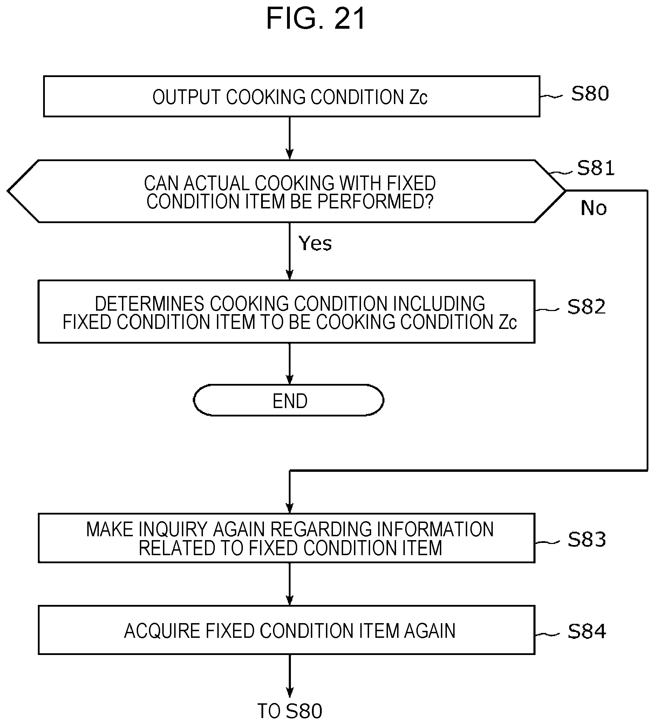

Fig. 21 is a diagram illustrating a procedure for determining the validity of a fixed condition item r2.

As illustrated in Fig. 21, the information provision system 1 determines whether or not actual cooking with an acquired fixed condition item r2 can be performed (Step S81). In a case where cooking including the fixed condition item r2 is feasible (Yes in S81), the information provision system 1 determines the cooking condition including the fixed condition item r2 to be a cooking condition Zc (Step S82). In a case where cooking including the fixed condition item r2 is infeasible (No in Step S81), the information provision system 1 makes an inquiry again regarding information related to a fixed condition item r2 (Step S83). The information provision system 1 acquires a fixed condition item r2 from the terminal device 10 again (Step S84), and derives a cooking condition Zc again on the basis of this fixed condition item r2.

An information provision method according to the present embodiment includes a step for acquiring first component information i1 related to a component contained in a cooking ingredient C, which is not yet cooked, a step for acquiring a reference cooking condition Rc, which serves as a reference condition for when the cooking ingredient C is cooked, based on dish information im related to a dish using the cooking ingredient C, a step for acquiring second component information i2 related to a component contained in a dish D, and a cooking condition output step for outputting a cooking condition Zc for cooking the cooking ingredient C, based on at least the first component information i1, the reference cooking condition Rc, and the second component information i2.

In this manner, the output of the cooking condition Zc on the basis of the first component information i1, the reference cooking condition Rc, and the second component information i2 makes it possible to reproduce components contained in the dish D. This can suppress variations occurring in the cooked dish D.

Note that the example has been illustrated in which Steps S60 and S70 are executed after Step S50; however, this is not the only case, and Steps S60 and S70 may be executed between Steps S40 and S50. Moreover, Steps S20 to S70 may be executed before Step S10.

The information provision method according to the present embodiment may also include the following steps.

The information provision method may further include a step for acquiring reference component information, which serves as a reference for a component of a cooking ingredient C, which is not yet cooked, and a cooking condition Zc derived based on a comparison between the first component information i1 and the reference component information may be output in the step for outputting a cooking condition Zc.

For example, component information (reference component information) regarding cooking ingredients C used during training is incorporated into the cooking condition derivation model 80 and is stored as data. Thus, it is possible to derive a cooking condition Zc by comparing the first component information i1 and the reference component information.

According to this, onion soup corresponding to the second component information i2, namely onion soup with the same taste, can be made whether onions from a production region X or onions from a production region Y are used, for example. That is, even when cooking ingredients from different production regions are used, component-based menus can be created. This can suppress variations occurring in the cooked dish.

### [Modification of Embodiment]

A modification of the embodiment will be described. In this modification, an example will be described in which an important component contained in the dish D is determined and a cooking condition Zc is derived such that a cooking condition including the important component is reflected.

An important component is a key component among the components contained in the dish D. The key component may be a component that is important for determining the taste or a component that is important for health. For example, onions contain allicin (Allicin) as a component, and this component helps promote blood circulation, prevent blood clots, relieve fatigue, and boost immunity. An information provision system 1A according to the modification has the following configuration to suppress variations occurring in the cooked dish D.

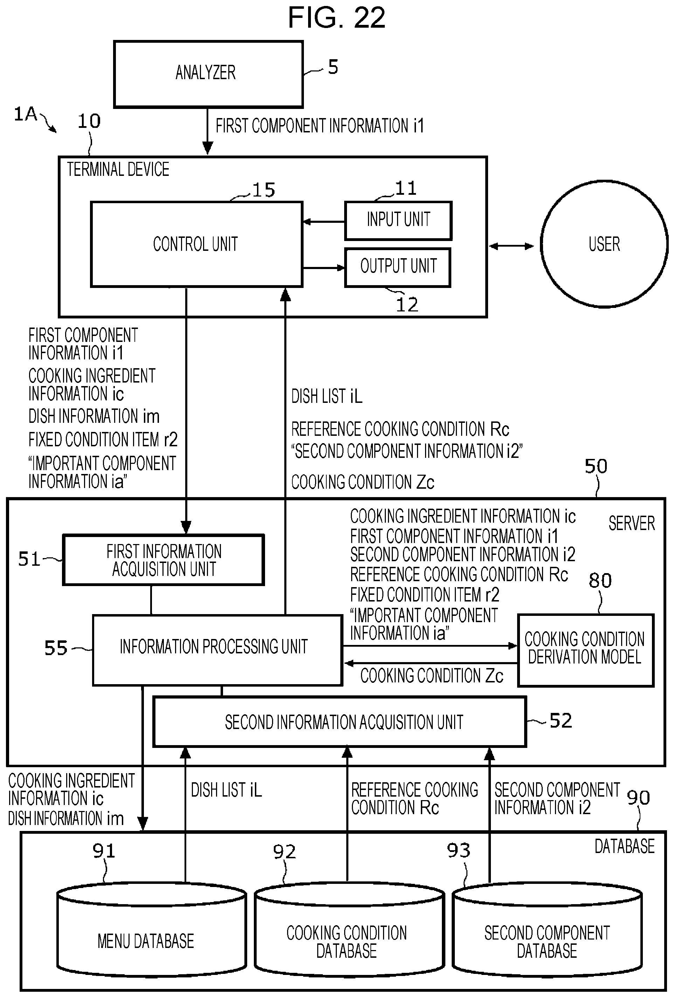

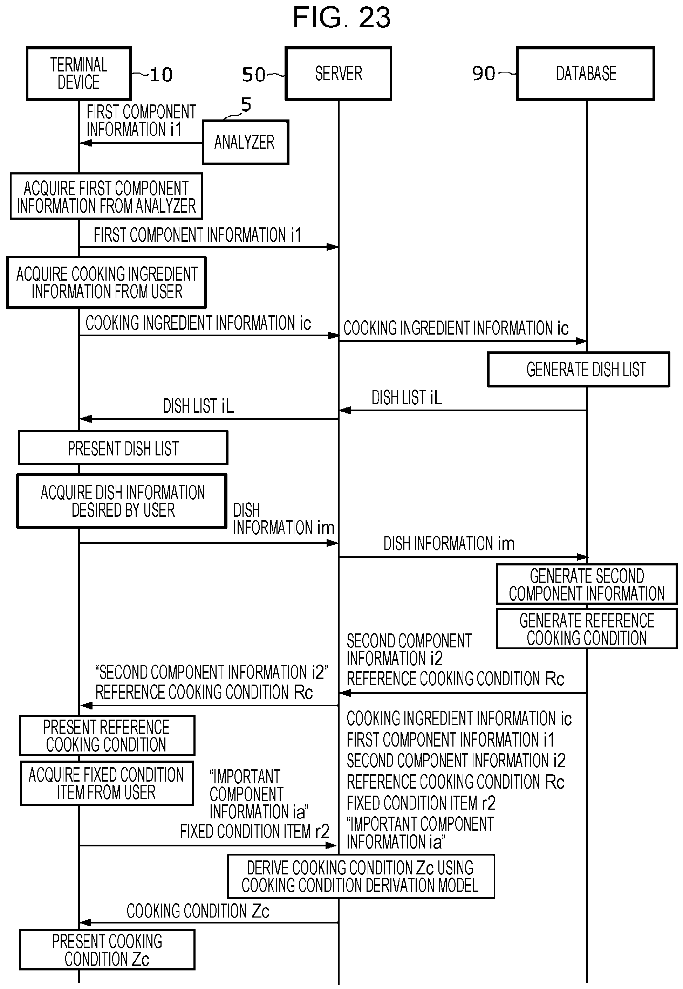

Fig. 22 is a block diagram illustrating a functional configuration of the information provision system 1A according to the modification of the embodiment. Fig. 23 is a sequence diagram illustrating the operation of the information provision system 1A.

The information provision system 1A according to the modification includes the terminal device 10, the server 50, and the database 90. Note that Fig. 22 also illustrates the analyzer 5.

As illustrated in Fig. 22, the analyzer 5 transmits first component information i1 related to components contained in cooking ingredients C, which are not yet cooked, to the terminal device 10. The terminal device 10 transmits the first component information i1 to the server 50.

The terminal device 10 accepts cooking ingredient information ic from the user, and transmits the cooking ingredient information ic to the server 50. The server 50 outputs the cooking ingredient information ic to the database 90. The database 90 outputs a dish list iL based on the cooking ingredient information ic to the server 50. The server 50 transmits the dish list iL to the terminal device 10.

The terminal device 10 displays the dish list iL. The terminal device 10 accepts dish information im indicating a dish D desired by the user among the one or more dishes D included in the dish list iL and transmits the dish information im to the server 50. The server 50 outputs the dish information im to the database 90. The database 90 outputs a reference cooking condition Rc and second component information i2 corresponding to the dish information im to the server 50. The server 50 transmits the reference cooking condition Rc to the terminal device 10. Up to this point, the modification is substantially the same as the embodiment.

The server 50 according to the present modification also transmits, to the terminal device 10, the second component information i2 output from the database 90.

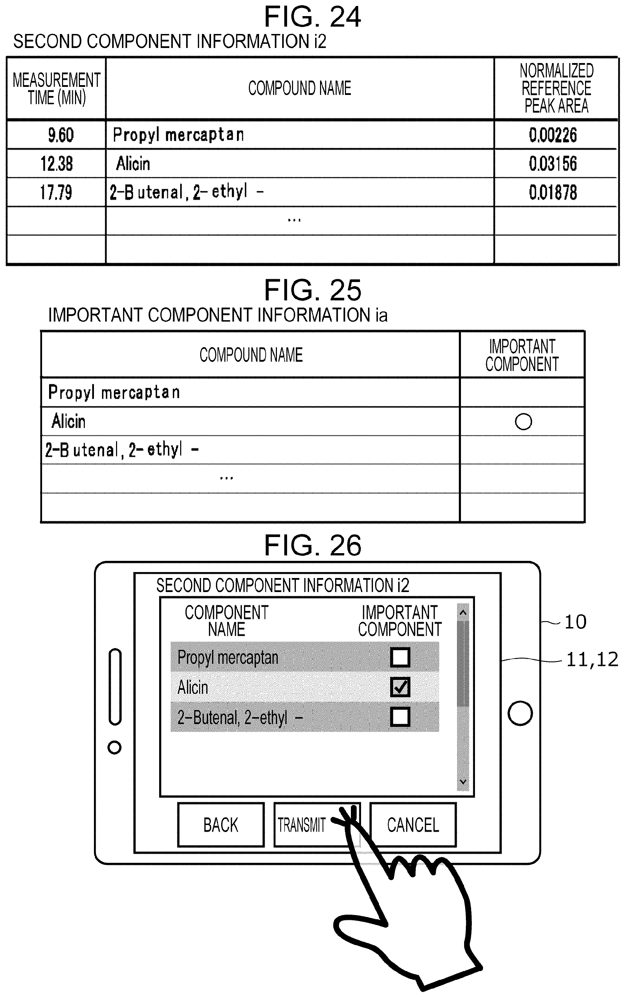

Fig. 24 is a diagram illustrating an example of information related to a second component.

This diagram illustrates second component information i2 for a case where a dish D is onion soup. In this example, the second component information i2 includes allicin as a component.

The terminal device 10 displays the reference cooking condition Rc and the second component information i2. In the following, an important component included in the second component information i2 will be mainly described.

Fig. 25 is a diagram illustrating an example of important component information ia. Fig. 26 is a diagram illustrating an example of a screen for when an important component is selected.

As illustrated in Fig. 26, the terminal device 10 accepts information for selecting, as an important component, at least one component from the second component information i2, namely among the components contained in the dish D. This diagram illustrates an example in which allicin is selected as an important component. The terminal device 10 transmits, to the server 50, important component information ia related to the important component and information related to the reference cooking condition Rc.

The server 50 inputs the important component information ia, the cooking ingredient information ic, the first component information i1, the second component information i2, and the reference cooking condition Rc into the cooking condition derivation model 80.

The cooking condition derivation model 80 derives a cooking condition Zc on the basis of the important component information ia, the cooking ingredient information ic, the first component information i1, the reference cooking condition Rc, and the second component information i2, and outputs the cooking condition Zc to the server 50.

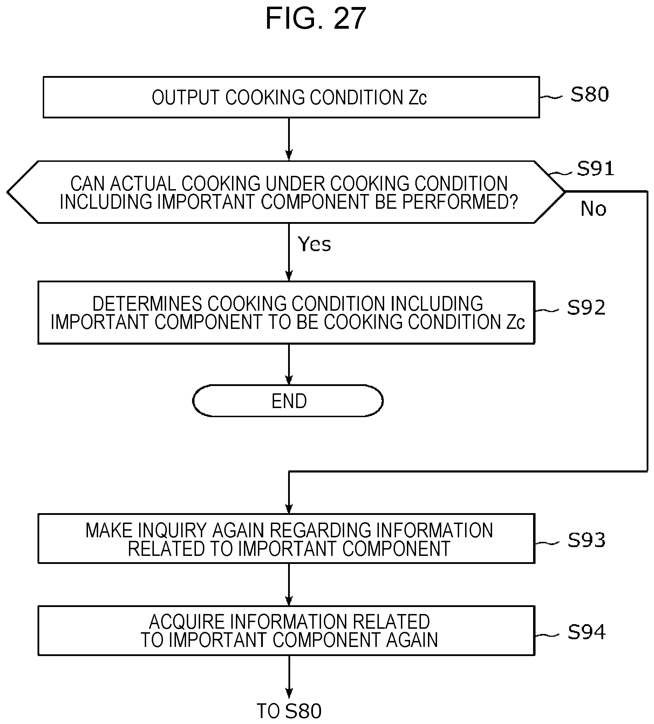

Fig. 27 is a diagram illustrating a procedure for determining the validity of a cooking condition including an important component.

As illustrated in Fig. 27, the information provision system 1A determines whether or not actual cooking under a cooking condition including an acquired important component can be performed (Step S91). In a case where actual cooking under the cooking condition including the acquired important component can be performed (Yes in S91), the information provision system 1A determines the cooking condition including the important component to be a cooking condition Zc (Step S92). In a case where actual cooking under the cooking condition including the acquired important component is infeasible (No in Step S91), the information provision system 1A makes an inquiry again regarding information related to an important component (Step S93). The information provision system 1A acquires information related to an important component again from the terminal device 10 (Step S94), and derives a cooking condition Zc again on the basis of this important component.

The server 50 transmits the derived cooking condition Zc to the terminal device 10. The terminal device 10 provides the cooking conditions Zc to the user.

The information provision system 1A according to the modification transfers information, such as the important component information ia, the cooking ingredient information ic, the first component information i1, the second component information i2, the reference cooking condition Rc, the condition adjustment item r1, and the cooking condition Zc, between the terminal device 10, the server 50, and the database 90, and performs information processing on these pieces of information. As a result, the information provision system 1A provides, to the user, information related to the cooking condition Zc in which the cooking condition including the important component is reflected.

Note that the information provision system 1A may present, to the user, the entire second component information i2 serving as component information regarding a dish D. The information provision system 1A may separately list compounds (components) that are known to have a positive effect on the human body in advance and present only the corresponding components to the user. The information provision system 1A may select important components for each dish D in advance and present only the components as options to the user. In this case, information related to the selection of the important components may be stored together with the second component information i2 in the database 90.

For example, when the information provision system 1A finds a cooking condition that satisfies all of the important components, the cooking condition may be treated as a cooking condition Zc. In a case where there is not a cooking condition that satisfies all of the important components (for example, in a case where there is a trade-off relationship), the information provision system 1A may treat, as a cooking condition Zc, a cooking condition that minimizes the error between the target value of each important component (the quantity of the component contained in the dish D) and the optimal value (for example, the quantity of the component in a case where cooking is performed under a cooking condition calculated from an artificial intelligence (AI) model). The information provision system 1A may present cooking conditions Zc that satisfy the respective important components and accept a selection made by the user in response.

### (Other Embodiments)

The information provision method and the like according to the embodiments of the present disclosure have been described above; however, the present disclosure is not limited to each of the embodiments. Embodiments obtained by adding various modifications which those skilled in the art can conceive of to the present embodiments and embodiments constructed by combining constituent elements from different embodiments may also be included in the scope of one or more embodiments of the present disclosure, provided that the embodiments do not deviate from the gist of the present disclosure.

In the above-mentioned embodiments, the example has been illustrated in which the analyzer 5 and the terminal device 10 establish a communication connection using a wireless communication method; however, the above-mentioned embodiments are not limited to the example. For example, the analyzer 5 may establish a communication connection with the server 50 via a communication network. In this case, the first component information i1 is directly transmitted from the analyzer 5 to the server 50.

In the above-mentioned embodiments, the information processing unit 55 and the cooking condition derivation model 80 are illustrated as separate constituent elements but are not limited to this. For example, the cooking condition derivation model 80 may be provided inside the information processing unit 55.

In the above-mentioned embodiments, the server 50 and the database 90 are separate constituent elements; however, the server 50 and the database 90 may become the same single constituent element, and the server 50 may have the same function as the database 90. That is, the generation of the dish list iL, the second component information i2, and the reference cooking condition Rc may be performed within the server 50.

In the above-mentioned embodiments, the example has been illustrated in which the information provision system 1 is constituted by the terminal device 10, the server 50, and the database 90; however, the information provision system 1 is not limited to this. For example, in a case where the terminal device 10 has the same function as the server 50, the information provision system 1 may be constituted by the terminal device 10 and the database 90. In that case, the terminal device 10 may be provided with the functions of the first information acquisition unit 51, second information acquisition unit 52, and information processing unit 55 and the cooking condition derivation model 80. Note that the cooking condition derivation model 80 may be provided not in the terminal device 10 but in the database 90.

In the above-mentioned embodiments, the example has been illustrated in which the analyzer 5 is not included in the information provision system 1; however, the above-mentioned embodiments are not limited to this. For example, the terminal device 10 may have the function of the analyzer 5. The analyzer 5 may have the function of the terminal device 10, and the information provision system 1 may be constituted by the analyzer 5, the server 50, and the database 90.

In the above-mentioned embodiments, each constituent element may be realized by executing a software program appropriate for the constituent element. Each constituent element may be realized by a program execution unit, such as a central processing unit (CPU) or a processor, reading out and executing a software program recorded on a recording medium, such as a hard disk or a semiconductor memory.

Each constituent element may be realized by hardware. Each constituent element may be a circuit (or an integrated circuit). These circuits may constitute a single circuit as a whole or may be separate circuits. Each of these circuits may be a general-purpose circuit or a dedicated circuit.

The general aspect of or a specific aspect of the present disclosure may also be realized as a system, a device, a method, an integrated circuit, a computer program, or a recording medium, such as a computer-readable CDROM. The general aspect of or a specific aspect of the present disclosure may also be realized as any combination of a system, a device, a method, an integrated circuit, a computer program, and a recording medium.

For example, the present disclosure may be realized as a data processing unit in the above-mentioned embodiments or an information processing system according to the above-mentioned embodiments. The present disclosure may also be realized as an information processing method executed by a computer, such as the information processing system according to the above-mentioned embodiments. The present disclosure may be realized as a program for causing a computer to execute such an information processing method, or as a computer-readable non-transitory recording medium in which such a program is recorded.

### Industrial Applicability

An information provision method according to the present disclosure can be widely used for services that provide cooking information.

### Reference Signs List

1, 1A information provision system
5 analyzer
10 terminal device
11 input unit
12 output unit
15 control unit
50 server
51 first information acquisition unit
52 second information acquisition unit
55 information processing unit
80 cooking condition derivation model
90 database
91 menu database
92 cooking condition database
93 second component database
C cooking ingredient
D dish
i1 first component information
i2 second component information
ia important component information
ic cooking ingredient information
iL dish list
im dish information
Rc reference cooking condition
r1 condition adjustment item
r2 fixed condition item
Zc cooking condition

## Claims

1. An information provision method,
the information provision method being executed by a computer, comprising:
acquiring first component information related to a component contained in a cooking ingredient, which is not yet cooked;
acquiring second component information related to a component contained in a dish using the cooking ingredient; and
outputting a cooking condition for cooking the cooking ingredient, based on at least the first component information and the second component information.

2. The information provision method according to claim 1, further comprising:
acquiring a reference cooking condition serving as a reference condition for when the cooking ingredient is cooked, based on dish information related to the dish using the cooking ingredient, wherein
in the outputting a cooking condition,
the dish corresponding to the second component information is set as a goal, and the cooking condition for cooking the cooking ingredient, which is not yet cooked and corresponds to the first component information, is output based on the reference cooking condition.

3. The information provision method according to claim 2, further comprising:
acquiring cooking ingredient information including information related to a quantity of the cooking ingredient, wherein
in the outputting a cooking condition,
the cooking condition, which is obtained by varying the quantity of the cooking ingredient with respect to the reference cooking condition, is output based on the reference cooking condition and the cooking ingredient information.

4. The information provision method according to claim 3, further comprising:
acquiring a dish list including one or more of the dish, based on the cooking ingredient information; and
acquiring, as the dish information, information indicating a dish selected from the one or more of the dish included in the dish list.

5. The information provision method according to claim 2,
each of the reference cooking condition and the cooking condition having condition adjustment items in common with each other, further comprising:
accepting information related to a setting for at least one condition adjustment item among the condition adjustment items included in the reference cooking condition, wherein
in the outputting a cooking condition, the cooking condition, which is derived such that the setting for the at least one condition adjustment item is reflected, is output.

6. The information provision method according to claim 5, wherein
information related to the setting for the condition adjustment item is information related to a fixed condition item that causes the setting for the condition adjustment item to remain unchanged and be fixed, and
in the outputting a cooking condition, the cooking condition, which is derived such that the information related to the fixed condition item is reflected, is output.

7. The information provision method according to claim 6, wherein
in the outputting a cooking condition, in a case where it is determined that cooking including the fixed condition item is feasible, a cooking condition including the fixed condition item is determined to be the cooking condition.

8. The information provision method according to claim 7, wherein
in the outputting a cooking condition, in a case where it is determined that cooking including the fixed condition item is infeasible, information related to the fixed condition item is acquired again.

9. The information provision method according to claim 1, further comprising:
accepting information for selecting, as an important component, at least one component among components contained in the dish, wherein
in the outputting a cooking condition, the cooking condition, which is derived such that a cooking condition including the important component is reflected, is output.

10. The information provision method according to any one of claims 1 to 9, further comprising:
generating a cooking condition derivation model for generating the cooking condition, wherein
in the generating a cooking condition derivation model, the cooking condition derivation model is generated by machine learning a relationship between information related to the component contained in the cooking ingredient, which is not yet cooked, a cooking condition for the dish using the cooking ingredient, and information related to the component contained in the dish, and
in the outputting a cooking condition, the cooking condition, which is derived using the cooking condition derivation model, is output.

11. An information provision system comprising:
a first information acquisition unit that acquires first component information related to a component contained in a cooking ingredient, which is not yet cooked;
a second information acquisition unit that acquires second component information related to a component contained in a dish using the cooking ingredient;
an information processing unit that derives a cooking condition for cooking the cooking ingredient, based on at least the first component information and the second component information; and
an output unit that outputs information related to a pre-cooking condition.

12. The information provision system according to claim 11, wherein
the first component information is information obtained by an analyzer analyzing the component contained in the cooking ingredient.

13. A program causing a computer to execute:
acquiring first component information related to a component contained in a cooking ingredient, which is not yet cooked;
acquiring second component information related to a component contained in a dish using the cooking ingredient; and
outputting a cooking condition for cooking the cooking ingredient, based on at least the first component information and the second component information.
